## Europäisches Patentamt
## European Patent Office
## Office européen des brevets

(19)

(11) Publication number: **0 007 132**
**B1**

(12)

# EUROPEAN PATENT SPECIFICATION

(45) Date of publication of patent specification: **06.01.82**

(51) Int. Cl.³: **C 05 G 1/00**

(21) Application number: **79200357.6**

(22) Date of filing: **30.06.79**

(54) **Process for the preparation of a granular NPK fertilizer and granular NPK fertilizers obtained by this process.**

(30) Priority: **04.07.78 NL 7807219**

(43) Date of publication of application:
**23.01.80 Bulletin 80/2**

(45) Publication of the grant of the European patent:
**06.01.82 Bulletin 82/1**

(84) Designated Contracting States:
**AT BE DE FR GB IT NL SE**

(56) References cited:
**BE - A - 648 657**
**GB - A - 1 008 402**
**NL - B - 109 795**
**US - A - 3 539 326**

(73) Proprietor: **UNIE VAN KUNSTMESTFABRIEKEN B.V.**
**Postbus 45**
**NL-3500 AA Utrecht (NL)**

(72) Inventor: **Hoogendonk, Johan Willem**
**Strensstraat 4**
**NL-6162 AW Geleen (NL)**
Inventor: **Lucassen, Servatius Jozef**
**Rooseveltstraat 41**
**NL-6333 EA Schimmert (NL)**

(74) Representative: **Roeffen, Wilhelmus Johannes Maria et al,**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Process for the prepartion of a granular NPK fertilizer
and granular NPK fertilizers obtained by this process

The invention relates to a process for the preparation of a granular NPK fertilizer, in which a solid potassium salt, such as potassium chloride, is mixed with an ammonium nitrate-containing liquid phase that also contains ammonium phosphate, or to which ammonium phosphate is added as next step, and the mixture thus obtained is granulated.

The problem attending such a process is the disintegration of the granules during storage, in particular if the temperature at which the product is stored lies above 35°C. Disintegration here denotes the phenomenon that during storage continuing chemical reactions and the attendant formation of new crystals cause the granules to show a strong decrease in breaking strength, to start cracking at the surface, and to show serious efflorescence of salts at the surface, which results in annoying dust formation and an increase of fine particles. This efflorescence furthermore gives rise to coalescence of the individual grains, the so-called caking. It is true that it has been found possible to suppress these phenomena either by heating the potassium salt before the addition or by heating the entire mixture of N compound, P compound and K compound and thoroughly mixing it before granulation, but these measures require a rather considerable consumption of energy, while comparatively large equipment is needed owing to the long mixing time.

The invention consequently aims at a simple process for the preparation of stable granular NKP fertilizers in which the abovementioned drawbacks do not or hardly occur.

According to the invention this object can be achieved by adding the potassium salt in the form of particles having an average size of at most 55 $\mu$ and containing at most 1% by weight of particles of over 50 $\mu$ and having a temperature of between 5 and 40°C. The average particle size preferably is at most 50 $\mu$.

In this way granular NPK fertilizers are obtained that exhibit no or hardly any tendency towards disintegration during storage. It is not necessary then to preheat the potassium salt or to use a separate mixer in which the mixture is retained for a given period of time.

The potassium salt can be mixed into the NP melt at the start of the granulation. The mixture may be processed into granules by granulation, e.g. by means of a granulating screw. The potassium salt can be added to the NP melt shortly before this melt is fed into the screw or it may be fed directly into the screw.

The mixture may also be prilled. In this case the potassium salt may be added in the prilling head or in the pipeline that conveys the NP melt to the prilling head.

The potassium salt has a temperature of between 5°C and 40°C. At lower temperatures the effect of the process according to the invention becomes less, while higher temperatures are admissiable, it is true, but require a separate heating stage and offer no additional advantage. At a potassium salt temperature of between 10 and 25°C, i.e. normal ambient temperature, very satisfactory results are obtained with the process according to the invention.

The potassium salts thay may be used include inter alia potassium chloride and potassium sulphate. The invention particularly is of interest when using potassium chloride, as in that case the above-mentioned disintegration phenomena will be strongest.

Potassium chloride of the desired particle size can be obtained in a known way be grinding coarse KCl. It is not necessary to use pure KCl as a starting material. Technical-grade KCl, which contains small amounts of NaCl and/or $MgCl_2$, may be used without any objection. Also KCl covered with a small amount of an organic coating agent, for instance an amine, may be used without previous purification.

The process according to the invention is suitable for the preparation of NPK fetilizers of various compositions, such as, e.g., 17—17—17, 15—15—15, 20—10—10, 25—5—5, etc.

The potassium salt can be added to an ammonium nitrate melt or an ammonium nitrate solution, after which the ammonium phosphate is added in solid or liquid form, or first a liquid mixture of ammonium nitrate and ammonium phosphate can be prepared, after which the potassium salt is added to the mixture thus prepared.

Such a liquid mixture of ammonium nitrate and ammonium phosphate may be prepared in a known way, e.g. by ammoniating a mixture of nitric acid and phosphoric acid, or by adding ammonium nitrate to phosphoric acid followed by ammoniation, or it may have been obtained by the so-called nitrophosphate process. This mixture may contain 0—10% by weight of water calculated to the total weight, and in most cases contains 4—5% of water. ammonium sulphate, or it may be used as a double salt, e.g. ammonium. nitrate sulphate. Part of the ammonium phosphate may also have been replaced by other fertilizers, e.g. alkali and/or alkali-earth phosphates, or be used in the form of double salts, e.g. ammonium phosphate sulphate. The ammonium phosphate is preferably present as orthophosphate, but, if so desired, all or part of it may be present as metaphosphate or polyphosphate. The molten mixture may furthermore contain other fertilizer salts that are compatible with the system, e.g. calcium nitrate, magnesium salts, etc.

Part of the ammonium nitrate may have been replaced by other ammonium salts, e.g.

EXAMPLE 1

Granular KCl having an average particle size of 110 $\mu$ and preheated at 115°C was mixed in a mixing vessel with a liquid mixture of ammonium nitrate and ammonium phosphate having a N:P$_2$O$_5$ ratio of 1:1, a temperature of 160°C and a moisture content of 4.5% by weight. The resulting mixture, which had a viscosity of 100—150 cP, was thoroughly mixed for about 25 seconds and consecutively granulated in a granulating screw. The amount of KCl had been so chosen that a product with a N:P$_2$O$_5$:k$_2$O ratio of 17:17:17 was obtained.

Since it has been found that a decrease of the storage stability of the NPK fertilizer granules is largely due to insufficient conversion of KCl and NH$_4$NO$_3$, so that the granule still contains free KCl, samples were drawn from the mixture in the mixing vessel and the degree of conversion of KCl in these samples were determined by X-ray analysis. It was found that about 90% of the KCl had been converted after a mixing period of 25 seconds.

The product obtained from the granulating screw showed hardly any disintegration phenomena upon storage for more than 6 months. It was found that the breaking strength of the product was virtually unchanged (55—60 kg/cm$^2$), while the amount of small particles formed and also the ammount of caked granules were negligibly small. The granules showed no efflorescence at the surface.

EXAMPLE II

In the same way as in example I, KCl ground to an average particle size of 60 $\mu$ and preheated to 85°C was mixed with a similar NP melt and granulated in a granulating screw after a mixing period of 5 seconds. It was determined by X-ray analysis that about 90% of the KCl had been converted after a mixing time of 5 seconds. This granular product, showed no disintegration pheonomena upon storage for over 6 months.

EXAMPLE III

In the same way as in example I, KCl having an average particle size of 50 $\mu$, a content of particles of over 150 $\mu$ of less than 1% by weight and a temperature of 20—25°C was then mixed according to the invention with NP melt of the same composition· without preheating and subsequently granulated. It was determined by X-ray analysis that over 90% of the KCl had been converted almost immediately after addition of the KCl to the mixing vessel. The resulting granular product showed no disintegration phenomena upon storage for over 6 months. The original breaking strength (55—60 kg/cm$^2$) was found to be unchanged and the amount of fine particles formed was negligibly small. No caking had occurred and the product did not cause dust formation when bagged.

EXAMPLE IV

In the same way as in Example I, the KCl with an average particle size of 110 $\mu$ was mixed with the NP melt without preheating. It was shown by X-ray analysis that only 70% by weight of the KCl had been converted after a mixing time of even 30 seconds. The mixture was then granulated in a granulation screw. The granular product showed phenomena of very strong disintegration already after storage for some weeks. The amount of caked granules was 40% by weight, while annoying dust formation occurred when the product was bagged. The breaking strength of the granules had fallen to below 35 kg/cm$^2$.

EXAMPLE V

A liquid mixture of ammonium nitrate and ammonium phosphate having a N:P$_2$O$_5$ ratio of 1:1, a temperature of 160°C and a moisture content of 4.5% by weight was fed to a granulating screw. KCl with an average particle size 50 $\mu$·and with less than 1% by weight of particles of over 150 $\mu$·was fed directly to this screw. The KCl added had not been preheated (temperature 20—25°C). It was determined by X-ray analysis that over 90% by weight of the KCl in the granulated product had been converted. The product showed no disintegration phenomena upon storage for more than 6 months. The breaking strength was found to be virtually unchanged (55—60 kg/cm$^2$), while hardly any small particles had formed and no particles at all had caked together. The products showed no efflorescence at the surface and did not cause any dust formation when bagged.

EXAMPLE VI

In the same way as in example V, a granular fertilizer was prepared by feeding non-preheated KCl of an average particle size of 110 $\mu$ directly to the granulating screw. X-ray analysis showed that only 70% of the KCl in the granulated product had been converted. Upon 6 weeks' storage the product had caked to such an extent that bagging was virtually impossible. The product furthermore gave rise to annoying dust formation.

**Claims**

1. Process for the preparation of a granular NPK fertilizer, in which a solid potassium salt is mixed with an ammonium nitrate-containing liquid phase that also contains ammonium phosphate, or to which ammonium phosphate is added as next step, and the mixture thus obtained is granulated, characterized in that the potassium salt is added in the form of particles having an average size of at most 55 $\mu$ and containing at most 1% by weight of particles of over 150 $\mu$ and having a temperature of between 5 and 40°C.

2. Process according to claim 1, characterized in that a potassium salt with an average particle size of at most 50 $\mu$ is applied.

3. Process according to claim 1 or 2, characterized in that potassium salt particles with a temperature of between 10 and 25°C are added.

4. Process according to claims 1—3, characterized in that the potassium salt is fed to a granulating screw which operates in a known way and which is also fed with a liquid mixture of ammonium nitrate and ammonium phosphate.

5. Process according to claims 1—4, characterized in that as potassium salt potassium chloride is applied.

6. Granular fertilizer obtained by the process according to any one of the claims 1—5.

**Revendications**

1. Procédé de préparation d'un engrais NPK granuleux, selon lequel un sel de potassium solide est mélangé avec une phase liquide contenant du nitrate d'ammonium et qui contient aussi du phosphate d'ammonium ou auquel il a été ajouté ensuite du phosphate d'ammonium et qui peut contenir éventuellement encore d'autres sels d'engrais, alors que le mélange ainsi obtenu est granulé, caractérisé en ce que le sel de potassium est ajouté sous forme de particules, ayant une grosseur moyenne de tout au plus 55 $\mu$ — parmi lesquelles tout au plus 1% en poids des particules son supérieures à 150 $\mu$ — et une température située entre 5°C et 40°C.

2. Procédé selon la revendication 1, caractérisé en ce qu'on ajoute un sel de potassium sous forme de particules ayant une grosseur moyenne de tout au plus 50 $\mu$.

3. Procédé selon l'une des revendications 1 et 2, caractérisé en ce qu'on ajoute du sel de potassium, sous forme de particules, qui a une température située entre 10°C et 25°C.

4. Procédé selon l'une des revendications 1 à 3, caractérisé en ce qu'on amène le sel de potassium à une vis de granulation, qui fonctionne de façon connue, à laquelle on amène à la fois un mélange liquide de nitrate d'ammonium et de phosphate d'ammonium.

5. Procédé selon l'une des revendications 1 à 4, caractérisé en ce qu'on utilise du chlorure de potassium comme sel de potassium.

6. Engrais granuleux obtenu par la mise en oeuvre du procédé selon l'une des revendications 1 à 5.

**Patentansprüche**

1. Verfahren zu der Herstellung eines körnigen NPK-Düngemittels, gemäss dem ein festes Kaliumsalz mit einer ammoniumnitrathaltigen flüssigen Phase vermischt wird, welche bereits Ammoniumphosphat enthält oder der anschliessend Ammoniumphosphat beigegeben wird, und die ggf. noch andere Düngemittelsalze enthalten kann, worauf das so erhaltene Gemisch zu Körnern verarbeitet wird, dadurch gekennzeichnet, dass man das Kaliumsalz in Form von Teilchen mit einer mittleren Grösse von maximal 55 $\mu$ und einem Teilchenanteil > 150 $\mu$ von maximal 1 Gew.% und mit einer Temperatur zwischen 5 und 40°C beigibt.

2. Verfahren nach Anspruch 1, dadurch gekennzeichnet, dass man Kaliumsalz mit einer mittleren Teilchengrösse von maximal 50 $\mu$ verwendet.

3. Verfahren nach Anspruch 1 oder 2, dadurch gekennzeichnet, dass man ein teilchenförmiges Kaliumsalz mit einer Temperatur zwischen 10 und 25°C beigibt.

4. Verfahren nach den Ansprüchen 1—3, dadurch gekennzeichnet, dass man das Kaliumsalz einer im übrigen auf bekannte Weise arbeitenden Granulierschnecke zuführt, der zugleich ein flüssiges Gemisch aus Ammoniumnitrat und Ammoniumphosphat zugeführt wird.

5. Verfahren nach den Ansprüchen 1—4, dadurch gekennzeichnet, dass man als Kaliumsalz Kaliumchlorid verwendet.

6. Gekörnte Düngemittel, erhalten mit Hilfe des Verfahrens gemäss einem der Ansprüche 1—5.